# EUROPEAN PATENT APPLICATION

(11) **EP 3 293 656 A1**
(43) Date of publication of application: **14.03.2018**
(21) Application number: 16306160.9
(22) Date of filing: 13.09.2016
(51) Int. Cl.: G06F 21/52

(54) **METHOD FOR CONTROLLING ACCESS TO A TRUSTED APPLICATION IN A TERMINAL**

(71) Applicant: GEMALTO SA, 92190 Meudon (FR)
(72) Inventor: FOKLE, Milas, 13881 Gemenos Cedex (FR)

(57) **Abstract**

The invention is a method for controlling access to a trusted application installed in a Trusted Execution Environment (TEE) of a terminal which includes a Rich Execution Environment (REE) comprising a runnable code of a client application. The terminal includes a first kernel adapted to run the REE and a second kerneladapted to run the TEE. The method comprises the following steps:
- the first kernel sends a client application reference to the second kernel when the client application requests a service from the trusted application,
- the second kernel computes a checking value of a subset of the client application runnable code using the reference,
- the trusted application authenticates the client application by verifying the checking value versus a reference value retrieved using an identifier of the client application provided by the first kernel,
- the trusted application provides the requested service in case of successful authentication.

## Description

### (Field of the invention)

The present invention relates to methods of controlling access to a trusted application in a terminal. It relates particularly to methods of controlling access to a trusted application located in the trusted execution environment of a terminal equipment.

### (Background of the invention)

A Trusted Execution Environment (TEE) is defined by GlobalPlatform Device Technology - TEE System Architecture GPD_SPE_009 standard. It is an execution environment that runs alongside but isolated from the rest of the operating system of a terminal (which is generally named Rich Execution Environment). A TEE has security capabilities and meets certain security-related requirements. In particular, it protects TEE assets from general software attacks, defines rigid safeguards as to data and functions that a program can access, and resists a set of defined threats.

A mobile equipment can include both a TEE and a so-called Rich Execution Environment (REE) which is less secured than the TEE. An application (so-called Rich application or client application) located in the REE can call another application (so-called trusted application) located in then TEE. Since the security level of the REE is low, the Rich application can be modified by a malicious attacker and get a service from the trusted application by calling the trusted application.

There is a need for increasing the security of the management of access to a trusted application by a client application in a terminal.

### (Summary of the Invention)

An object of the invention is to solve the above mentioned technical problem.

The object of the present invention is a terminal including a Trusted Execution Environment and a Rich Execution Environment. The said Trusted Execution Environment comprises a trusted application. The Rich Execution Environment comprises a runnable code of a client application. The terminal includes a first kernel adapted to run the Rich Execution Environment and a second kernel adapted to run the Trusted Execution Environment. The first kernel is adapted to provide the second kernel with a reference of the client application when the client application requests a service from the trusted application. The second kernel is adapted to compute a checking value of a subset of the runnable code of the client application using the reference and to provide the trusted application with the checking value. The trusted application is adapted to retrieve a reference value from a secure storage area using an identifier of the client application provided by the first kernel, to authenticate the client application by verifying the checking value versus the reference value and to provide the requested service in case of successful authentication.

Advantageously, the reference may comprise a memory address of the subset of the runnable code of the client application and the second kernel may be adapted to compute the checking value using said memory address.

Advantageously, the second kernel may be adapted to compute the checking value using an irreversible cryptographic algorithm.

Advantageously, the secure storage area may be comprised in the Trusted Execution Environment.

Advantageously, the secure storage area may be comprised in a hardware secure element directly or remotely connected to the terminal.

Another object of the invention is a method for controlling access to a trusted application installed in a Trusted Execution Environment comprised in a terminal. The terminal includes a Rich Execution Environment which comprises a runnable code of a client application. The terminal includes a first kernel adapted to run the Rich Execution Environment and a second kernel adapted to run the Trusted Execution Environment. The method comprises the following steps:
- the first kernel provides the second kernel with a reference of the client application when the client application requests a service from the trusted application,
- the second kernel computes a checking value of a subset of the runnable code of the client application using said reference,
- the trusted application retrieves a reference value from a secure storage area using an identifier of the client application provided by the first kernel and authenticates the client application by verifying the checking value versus the reference value,
- the trusted application provides the requested service in case of successful authentication.

Advantageously, the first kernel may provide the second kernel with a memory address of the subset of the runnable code of the client application and the second kernel may compute the checking value using said memory address.

Advantageously, the second kernel may compute the checking value using an irreversible cryptographic algorithm.

Advantageously, the secure storage area may be comprised either in the Trusted Execution Environment or in a hardware secure element connected to the terminal.

Advantageously, a remote server may securely provision the secure storage area with the reference value.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts an example of architecture of a system comprising a remote server, a hardware secure element and a terminal according to a first embodiment of the invention,
- Figure 2 depicts an example of architecture of a terminal according to a second embodiment of the invention,
- Figure 3 shows a first example of a flow chart for controlling access to a trusted application according to an embodiment of the invention, and
- Figure 4 shows a second example of a flow chart for controlling access to a trusted application according to an embodiment of the invention.

### (Detailed description of the preferred embodiments)

The invention may apply to any types of terminal (or terminal equipment) comprising a Trusted Execution Environment (TEE). Such terminal may be a phone, a telecom device or a M2M (Machine-to-machine) box coupled to a host machine like a vehicle, a meter, a slot machine, a TV or a computer for example.

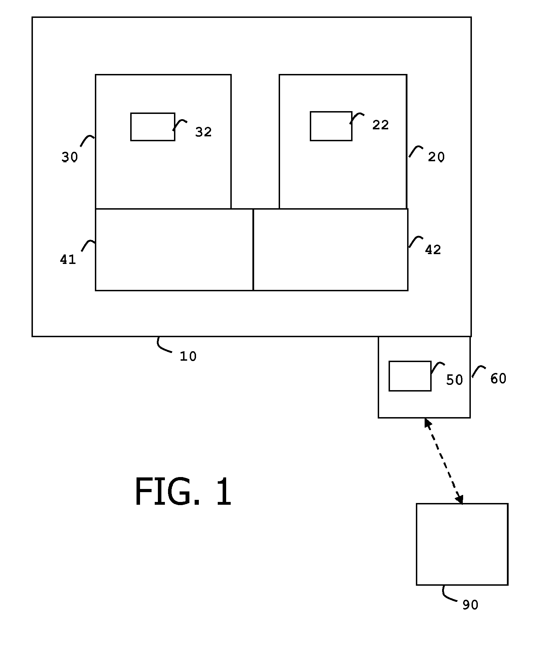

**Figure 1** shows an example of architecture of a system comprising a remote server 90, a hardware secure element 60 and a terminal 10 according to a first embodiment of the invention.

In this example, the terminal 10 is a mobile phone. The terminal comprises a Rich execution environment 30 and a trusted execution environment 20.

The terminal 10 comprises two operating system kernels: a first kernel 41 able to run the REE 30 and a second kernel 42 adapted to run the TEE 20. The combination of the first kernel 41 and the REE 30 is a Rich operating system while the combination of the second kernel 42 and the TEE 20 is a trusted operating system. The combination of both first and second kernels replace a conventional kernel.

The TEE 20 complies with GlobalPlatform Device Technology - TEE System Architecture GPD_SPE_009 standard.

A trusted application 22 is stored in the non-volatile memory of the Trusted Execution Environment 20. A client application 32 is stored in the memory of the Rich execution environment 30. The trusted application 22 and the client application 32 are software applications which may be implemented in any relevant language like C, Java, assembler or C++.

In the example of Figure 1, a hardware secure element 60 is connected to the terminal 10. A secure storage area 50 is located in the non-volatile memory of the hardware secure element 60. At least one reference value 52 allocated to the client application 32 is stored in the secure storage area 50.

The hardware secure element is a tamper resistant component. Such secure element are generally small devices comprising a non-volatile memory, a working memory (i.e. RAM), a processor and an operating system for computing treatments. They are called "secure" because they are able to control the access to the data they contain and to authorize or not the use of data by other machines. In general, secure elements have limited computing resources and limited memory resources and they are intended to be connected to a host machine which provides them with electric power. Secure elements may be removable or fixed to a host machine. For example, smart cards are kind of hardware secure elements.

For instance the hardware secure element 60 may be a UICC (Universal Integrated Circuit Card) which embeds SIM applications for telecommunication purposes.

The hardware secure element 60 may be directly connected to the terminal 10 as a UICC or as an embedded secure element. The hardware secure element 60 may also be a NFC secure element communicating through wireless protocol which the terminal 10. The hardware secure element 60 may also be located in a distant computer and remotely accessed by the terminal.

The remote server 90 may be a distant computer which is able to communicate with the hardware secure element 60 via the terminal 10 through a Telecom network or an Internet session for instance. The remote server 90 is configured to securely administrate the downloading of reference values in the secure storage area 50.

The first kernel 41 is adapted to send a reference 34 of the client application 32 to the second kernel 42 when the client application 32 requests a service from the trusted application 22. Preferably, the reference 34 comprises at least a memory address of the runnable code of the client application 32 in the REE 30. The reference 34 can also comprise the name of the client application 32, the path of the client application 32 or an identifier (e.g. AID for Application Identifier) of the client application 32.

In another embodiment, the reference 34 may comprise the whole runnable code of the client application 32.

The second kernel 42 is adapted to compute a checking value 44 of a subset of the runnable code of the client application 32 using the received reference 34 and to provide the trusted application 22 with the computed checking value 44. Preferably, the second kernel 42 generates the checking value 44 using an irreversible cryptographic algorithm like a hash. The second kernel 42 may also be designed to generate the checking value 44 as a signature of the subset of the executable code of the client application 32 (also named calling application 32).

It is to be noted that the second kernel 42 can have read access rights to the content of the REE 30 in order to be able to get the subset of runnable code needed to compute the checking value 44. Conversely, the first kernel 41 has no access right to the content of the TEE 20 and to the content of the second kernel 42.

The trusted application 22 is designed to retrieve the reference value 52 (corresponding to the client application 32) from the secure storage area 50 using an identifier of the client application 32 provided by the first kernel 41. For instance, the identifier may be included in the reference 34 and forwarded by the second kernel 42 to the trusted application 22. Alternatively, the identifier may be sent to the trusted application 22 via the second kernel 42 independently of the reference 34.

The trusted application 22 is designed to authenticate the client application 32 by verifying the checking value 44 versus the reference value 52 and to provide the service requested by the client application 32 in case of successful authentication. In one embodiment, the trusted application 22 performs the verifying operation by checking that the checking value 44 equals the reference value 52. In another embodiment, the client application 3 trusted application 22 2 may carry out the verifying operation by checking that the checking value 44 is linked to the reference value 52 by a preset mathematical function.

The secure storage area 50 may store several reference values allocate to as many client applications. The identifier allows to select the reference value relevant for the calling application 32.

The secure storage area 50 may also store several reference values allocated to the client application 32. In this case, the trusted application 22 may be designed to receive an index and to select the relevant reference value according to the received index. For instance, a first index may be assigned to the generation of a hash for the whole runnable code of the client application 32 while a second index may be assigned to the generation of a hash for a predefined snippet of the runnable code.

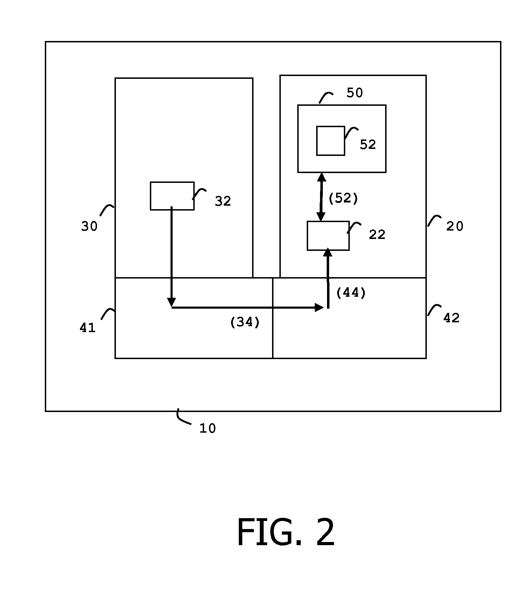

In another embodiment, the secure storage area 50 may be included in the non-volatile memory of the TEE 20. In this embodiment, the invention can be independent of the hardware secure element 60. Such an embodiment is shown at **Figure 2****.** The secure storage area 50 stores the reference value 52. The secure storage area 50 may contain a database, a registry or a file system containing the reference values allocated to the any number of client applications.

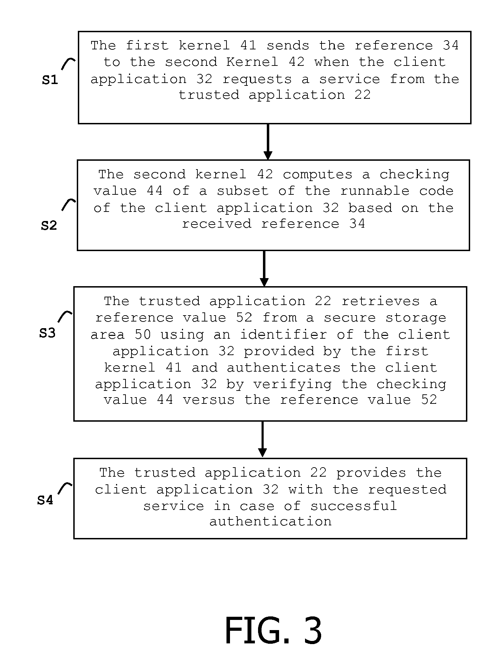

**Figure 3** shows a first example of a flow chart for controlling access to a trusted application 22 according to an embodiment of the invention.

In this example, the terminal 10 is assumed to be similar to the terminal of Figure 2.

At step S1, the first kernel 41 provides the second kernel 42 with a reference 34 of the client application 32 when the client application 32 requests a service from the trusted application 22. For instance the client application 32 may call a function of the trusted application 22 through a preset API (Application Programming Interface).

The first kernel 41 may detect the occurrence of a request to a service of the trusted application 22 by parsing the received SMC call coming from the REE 30.

It is to be noted that the authentication of the client application 32 by the trusted application 22 may be performed either each time the client application 32 requests a service from the trusted application 22 or only when some specific services are requested from the trusted application 22. In other words, the verification of the genuineness of the client application 32 is not necessarily systematic. Preferably, data needed to authenticate the calling client application 32 is sent to the trusted application 22 each time a call to the trusted the application 22 is performed. Then the trusted application 22 make the decision to check the genuineness of the client application 32 according to a preset security rule. For instance, authentication of the calling client application 32 may be compulsory when trying to access a sensitive operation.

At step S2, the second kernel 42 computes a checking value 44 of a subset of the runnable code of the client application 32 based on the received reference 34. For instance, the reference 34 may comprise a start address (in RAM of the REE) and a length (or an end address) and the second kernel 42 may generate the checking value 44 from the specified section in the REE working memory.

At step S3, the trusted application 22 retrieves a reference value 52 from the secure storage area 50 using the identifier of the client application 32 provided by the first kernel 41 and authenticates the client application 32 by verifying the checking value 44 versus the reference value 52.

At step S4, the trusted application 22 provides the requested service in case of successful authentication. For example, the trusted application 22 may send an applicative data (like a computed cryptogram, a key or a counter value for instance) to the client application 32. In another example, the trusted application 22 may establish a secure connection with an applicative server (like a banking server for instance) in response to the service request.

In case of unsuccessful authentication, the trusted application 22 does not provide the requested service and an appropriate action may be taken to track the unauthorized attempt to access the trusted application 22.

In one embodiment, the reference 34 comprises both a memory address of the executable code and the name of the calling application 32. The secure storage area 50 comprises both the reference value 52 and the name of its associated client application. The trusted application 22 authenticates the calling application 32 by checking the pair [checking value 44 + name of the client application] .

Advantageously, the reference 34 may comprise an identifier of the function called by the client application 32 and the secure storage area 50 may comprise a list of authorized function(s) for a given client application. Thus the trusted application 22 can authenticate the calling application 32 by checking the pair [checking value 44 + called function]. For instance a genuine client application may be authorized to read the purse value managed by the trusted application and not authorized to update the purse value.

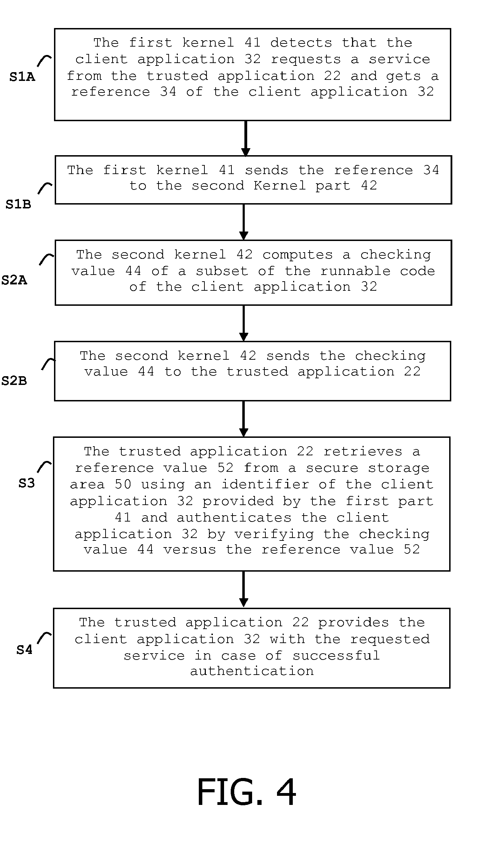

**Figure 4** shows a second example of a flow chart for controlling access to a trusted application 22 according to an embodiment of the invention.

In this example, the terminal 10 is assumed to be similar to the terminal of Figure 2.

At step S1A, the first kernel 41 detects that the client application 32 requests a service from the trusted application 22 and gets a reference 34 of the client application 32. For example, the reference 34 may comprises an offset in the working memory of the REE 30 corresponding to the beginning of the executable code of the client application 32. The reference 34 may also comprise the name or a short identifier uniquely allocated to the client application 32.

At step S1B, the first kernel 41 sends the reference 34 to the second kernel 42. For instance, the sending is performed through a specific syscall named Secure Monitor Call (SMC) which takes the reference 34 as input parameter.

At step S2A, the second kernel 42 computes a checking value 44 of a subset of the runnable code of the client application 32. Preferably, the checking value 44 is generated as a hash of the subset of the runnable code.

At step S2B, the second kernel 42 sends the checking value 44 to the trusted application 22.

Then further steps S3 and S4 are similar to those described at Figure 3.

A remote server 90 (as shown at Figure 1) may establish a secure communication session with the TEE 20 in order to provision the content of the secure storage area 50. Thus any reference values associated to a client application may be stored in the secure storage area 50, in particular when a new client application is installed in the REE 30 or when an existing client application is updated in the REE 30.

The invention is not limited to phone and may apply to any kinds of physical computer hosting a TEE and a REE.

Thanks to the invention, a cryptographic value reflecting the current value of the executable code of the client application is computed on-the-fly and used to dynamically authenticate the client application.

An advantage of the invention is to allow the control of access to as many trusted applications by any number of client applications.

The invention is not limited to the described embodiments or examples. In particular the features described in the above-presented examples and embodiments may be combined.

## Claims

1. A **terminal** (10) including a Trusted Execution Environment (20) and a Rich Execution Environment (30), said Trusted Execution Environment (20) comprising a trusted application (22), said Rich Execution Environment (30) comprising a runnable code of a client application (32),
**characterized in that** the terminal (10) includes a first kernel (41) adapted to run the Rich Execution Environment (30) and a second kernel (42) adapted to run the Trusted Execution Environment (20), **in that** said first kernel (41) is adapted to provide said second kernel (42) with a reference (34) of the client application (32) when the client application (32) requests a service from the trusted application (22), **in that** the second kernel (42) is adapted to compute a checking value (44) of a subset of the runnable code of the client application (32) using said reference (34) and to provide the trusted application (22) with the checking value (44), **in that** the trusted application (22) is adapted to retrieve a reference value (52) from a secure storage area (50) using an identifier of the client application (32) provided by the first kernel (41), to authenticate the client application (32) by verifying the checking value (44) versus the reference value (52) and to provide the requested service in case of successful authentication.

2. A terminal (10) according to claim 1, wherein the reference (34) comprises a memory address of the subset of the runnable code of the client application (32) and wherein the second kernel (42) is adapted to compute the checking value (44) using said memory address.

3. A terminal (10) according to claim 1, the second kernel (42) is adapted to compute the checking value (44) using an irreversible cryptographic algorithm.

4. A terminal (10) according to claim 1, wherein the secure storage area (50) is comprised in the Trusted Execution Environment (20).

5. A terminal (10) according to claim 1, wherein the secure storage area (50) is comprised in a hardware secure element (60) directly or remotely connected to the terminal (10).

6. A **method** for controlling access to a trusted application (22) installed in a Trusted Execution Environment (20) of a terminal (10), said terminal (10) including a Rich Execution Environment (30) comprising a runnable code of a client application (32),
**characterized in that** the terminal (10) includes a first kernel (41) adapted to run the Rich Execution Environment (30) and a second kernel (42) adapted to run the Trusted Execution Environment (20) and **in that** said method comprises the following steps:
- said first kernel (41) provides said second kernel (42) with a reference (34) of the client application (32) when the client application (32) requests a service from the trusted application (22),
- the second kernel (42) computes a checking value (44) of a subset of the runnable code of the client application (32) using said reference (34),
- the trusted application (22) retrieves a reference value (52) from a secure storage area (50) using an identifier of the client application (32) provided by the first kernel (41) and authenticates the client application (32) by verifying the checking value (44) versus the reference value (52),
- the trusted application (22) provides the requested service in case of successful authentication.

7. A method according to claim 6, wherein the first kernel (41) provides the second kernel (42) with a memory address of the subset of the runnable code of the client application (32) and wherein the second kernel (42) computes the checking value (44) using said memory address.

8. A method according to claim 6, wherein the second kernel (42) computes the checking value (44) using an irreversible cryptographic algorithm.

9. A method according to claim 6, wherein the secure storage area (50) is comprised either in the Trusted Execution Environment (20) or in a hardware secure element (60) connected to the terminal (10).

10. A method according to claim 6, wherein a remote server (90) securely provisions the secure storage area (50) with the reference value (52).
